(19) Europäisches Patentamt
European Patent Office
Office européen des brevets

(11) **EP 4 567 727 A1**

(12) **EUROPEAN PATENT APPLICATION**

(43) Date of publication:
**11.06.2025 Bulletin 2025/24**

(51) International Patent Classification (IPC):
***G06T 7/00*** (2017.01)          ***G06V 20/64*** (2022.01)

(21) Application number: **24212179.6**

(52) Cooperative Patent Classification (CPC):
**G06V 20/647; G06T 7/001;** G06T 2207/10028;
G06T 2207/30164

(22) Date of filing: **11.11.2024**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.12.2023 GB 202318749**

(71) Applicant: **Rolls-Royce plc**
**London N1 9FX (GB)**

(72) Inventors:
• **Nasser, Bilal**
**Derby, DE24 8BJ (GB)**
• **Pulisciano, Adriano**
**Derby, DE24 8BJ (GB)**
• **Uzzell, Harold**
**Derby, DE24 8BJ (GB)**
• **Lowe, Richard**
**Derby, DE24 8BJ (GB)**
• **Torti, Cristiano**
**Derby, DE24 8BJ (GB)**

(74) Representative: **Rolls-Royce plc**
**Moor Lane (ML-9)**
**PO Box 31**
**Derby DE24 8BJ (GB)**

(54) **ANALYSING IMAGES OF COMPONENTS**

(57)    Methods and apparatus for analysing images are described. In an example, processor circuitry receives data comprising three-dimensional (3D) data and two-dimensional (2D) data. The 2D data comprises a subject image of a subject element of a component, and the 3D data comprises data representing a geometry of a reference element of the component. The method further comprises determining a mapping between the subject image and the 3D data, wherein locations in the subject image are mapped to locations in 3D space and determining a measurement of a property of the subject element using the mapping.

```
┌─────────────────────────────────────────────────────────┐
│  Receive 2D subject element image and 3D data             │ 302
│  representing reference element                           │
└─────────────────────────────────────────────────────────┘
                          │
                          ▼
┌─────────────────────────────────────────────────────────┐
│  Determine mapping between 2D image and 3D data           │ 304
└─────────────────────────────────────────────────────────┘
                          │
                          ▼
┌─────────────────────────────────────────────────────────┐
│  Determine measurement of property using mapping          │ 306
└─────────────────────────────────────────────────────────┘
```

*FIG. 3*

EP 4 567 727 A1

**Description**

TECHNOLOGICAL FIELD

The present disclosure concerns methods and apparatus for analysing images, for example to inspect at least part of a component such as an engine.

BACKGROUND

In some examples, an inspection may be carried out in relation to a physical (e.g. mechanical) component.
For example, an aircraft typically comprises one or more engines for providing propulsive thrust and/or electrical energy to the aircraft. During operation, the one or more engines may become damaged (for example, due to relatively high operating temperatures, foreign object damage, corrosion or the like). Aircraft engines are often inspected at regular intervals by a human inspector to determine the condition of components within the engine. Where components are found to be in an unacceptable condition, the engine may be removed from the aircraft for repair. During such inspections, the aircraft is grounded and is not available for operation. Additionally, the quality and duration of the inspection is dependent upon the skill and experience of the inspector.

BRIEF SUMMARY

According to a first aspect there is provided a method which is implemented by processor circuitry and which comprises receiving data comprising three-dimensional (3D) data and two-dimensional (2D) data. The 2D data comprises a subject image of a subject element of a component and the 3D data comprises data representing a geometry of a reference element of the component. The method further comprises determining a mapping between the subject image and the 3D data, wherein locations in the subject image are mapped to locations in 3D space. The method further comprises determining a measurement of a property of the subject element using the mapping.
The locations may for example comprise pixels of a 2D image or voxels of a 3D image. The subject element may be an instance of a repeated element of the component. In other words the subject element may be nominally similar or identical to at least one other element of the component. The component may comprise a mechanical component. For example, the component may be a fan or turbine of an engine and the elements thereof may be repeated elements, such as blades. As 2D data is mapped to data representing a separate element, the method may be reused for a plurality of subject elements without acquiring specific 3D data of that element. For example, the 2D data may comprise a first subject image of a first subject element of a component and a second subject image of a second subject element of a component. A mapping may be determined between each subject image and the 3D data, wherein the 3D data is common to both mappings. In other words, a plurality of subject images may be mapped to the same 3D data representing the geometry of a reference element of the component. A measurement of a property of each subject element may be determined using the mapping. This may reduce the time taken to carry out the data acquisition and/or inspection. As components are typically taken out of service during inspection, this may in turn reduce the amount of time for which they are out of service. Moreover, mapping from a 2D image to 3D space may allow more accurate measurements to be acquired, as these can take in to account features such as surface contours and the like, without the need to acquire a 3D model of the subject element.
Furthermore, some of the methods described herein may reduce inaccuracies associated with an inconsistent rotation of a component during inspections, for example due to backlash or friction and/or may ease the requirement for steady and consistent rotation during inspections.
The 2D data may comprise a plurality of image frames imaging a plurality of elements of the component, for example taken from a video. This is a convenient way of acquiring a set of images. This may reduce inaccuracies associated with an inconsistent rotation of a component during inspections, for example due to backlash or friction and/or may ease the requirement for steady and consistent rotation during inspections.
In some examples, the orientation of the component, or of the elements within the component, may be changed between images.
In some examples, the mapping is a two-stage mapping. In one stage of the mapping, a 2D to 2D mapping between the subject image and a reference image may be determined, wherein the reference image is an image of a further element of the component. In other words, the subject element may be a first element of the component and the reference image may be an image of a second element of the component.
In another stage of the mapping, a 2D to 3D mapping between the reference image and the 3D data may be determined, such that locations in the reference image are mapped to locations in 3D space. For example, pixels in the reference image may be mapped to voxels in 3D space. The method may comprise combining such a 2D to 2D mapping and 2D to 3D mapping to determine the mapping between the subject image and the 3D data. In such examples, the 2D to 3D mapping may be reused for measurements of multiple subject elements.

The subject element may be a first element of the component, the reference element may be a second element of the component and the reference image may be an image of the reference element.

The subject element may be a first element of the component, the reference image may be an image of a second element of the component and the 3D data may comprise model data representing the geometry of a reference element.

Such methods may further comprise selecting the reference image from a plurality of image frames. For example, this may comprise selecting an image of a reference element, which may for example comprise an element which is relatively close to being an ideal element, in that it is in good physical condition. Alternatively or additionally, it may comprise selecting an image which shows an element in an 'average' or 'representative' condition, which may be more representative of the set of elements as a whole. For example, if the images show a set of elements with different levels of damage such as missing sections or surface texture, an image may be selected which has an intermediate level of damage.

In other examples, a plurality of reference images may be identified which show elements having a range of conditions, which may better represent the set of elements as a whole. In some such examples, there may be a further automatic or user selection from the set of reference images, for example of the reference image which best represents the particular element under inspection, in order to determine the mapping(s) for that element. Alternatively, a plurality of mappings to the set of reference images may be determined. Each reference image of a reference element may be mapped to 3D acquired from that reference element.

Alternatively or additionally, selecting the reference image may comprise selecting an image in which the reference element has an orientation or position which is suited to performing the method. For example, this could be associated with a lighting condition which resulted in effective capture of a good quality image, or an amount of the reference element in the field of view or the like.

Such a selection may be made by a user, or automatically using image processing software or the like. In some examples, a position of an element in an image may be determined using position measuring apparatus, and used to select a reference image. In other examples, an image may be associated with data indicative that the shroud was in a particular orientation when the image was acquired, and such data may be used to select the image.

In some examples, the 3D data may comprise model data representing the geometry of a reference element (e.g. a CAD model or the like). In other examples, the 3D data may comprise data measured from the reference element, e.g. a 3D scan of the geometry thereof. Use of a CAD model or the like may be convenient as a scan does not have to be acquired for a given reference element. Moreover, if a real element is used, this may include damage which may lead to inappropriate mapping of the subject image coordinates (for example if the reference element is missing a part thereof which is present in the subject element). However, the 2D to 3D mapping may be more robust when it is between a 2D image and 3D data representing the same underlying element. In some examples, the method can be used with previously captured data from a different source such that a reference image or video of a different component may be used to provide 2D and/or 3D data of the reference element.

The method may further comprise selecting the subject image(s) from the plurality of image frames. Selecting a subject image may comprise identifying the image frame in which the orientation of the subject element matches the orientation of the element in the reference image. In other words, selecting a subject image from a plurality of images of a subject element may be based on a conformity between an orientation of the subject element in the image and an intended orientation of the subject element. This may improve the accuracy of measurement as it provides corresponding information between the two data sets and/or mapping between similarly oriented components may be more robust.

Identifying the image frame in which the orientation of the subject element matches the orientation of the element in the reference image may comprise identifying matching features in the subject image and the reference image. Additionally or alternatively, such features may be used in determining the mapping(s). In some examples, identifying the image frame in which the orientation of the subject element matches the orientation of the element in the reference image may comprise using a position measuring apparatus which directly measures the position of an element when an image is captured. In other examples, an image may be associated with data indicative that the component or element was in a particular orientation when the image was acquired.

The 2D to 2D mapping may be determined prior to determining the 2D to 3D mapping.

The subject element may be a first element of the component; and the 3D data may comprise 3D data which may be: acquired by measuring a second element of the component; or model data representing the geometry of a reference element.

The method may further comprise identifying coordinates in the subject image which are indicative of the property to be measured, and the mapping may comprise a mapping of the coordinates. As only coordinates of interest may be mapped, this may reduce the processing to be carried out when compared to mapping the images as a whole. For example, the mapping may be applied to subject image pixels at the identified coordinates, rather than to all pixels of the subject image.

The subject element may be an instance of a repeated element of the component.

The elements may comprise turbine blades.

The method may further comprise imaging the component to obtain the 2D data and/or scanning or imaging the component to obtain the 3D data. Alternatively, pre-existing 2D and/or 3D data may be acquired from a memory, over a network or the like.

In some examples, a measurement of the property may be used to determine a quality metric of the component. This may provide a quantification of the quality of the features, which in turn may be provided to a user, or compared to a metric to determine if the element has passed or failed an inspection, or the like.

It may be noted that, in some examples, images may be acquired at a first time and some or all of the subsequent analysis steps may be carried out subsequently, for example once the component has returned to service. This may further reduce the time for which a component is out of use.

The method may comprise selecting the subject image from a plurality of images of the subject element based on a conformity between an orientation of the subject element in the images and an intended orientation of the subject element.

Selecting the subject image may comprise carrying out image registration using feature mapping.

The locations in the subject image may comprise pixels and/or wherein the locations in 3D space may comprise voxels.

According to a second aspect, there is provided a machine readable medium storing instructions which, when executed by processor circuitry, cause the processor circuitry to carry out the methods as described above in whole or in part.

According to a third aspect, there is provided an apparatus comprising processor circuitry, the processor circuitry configured to receive data comprising three-dimensional (3D) data and two-dimensional (2D) data. The 2D data comprises at least one subject image of at least one subject element of a component and the 3D data comprises data representing a geometry of a reference element of the component. The processor circuitry is further configured to determine a mapping between the subject image(s) and the 3D data, wherein locations in the first subject image(s) are mapped to locations in 3D space. The processor circuitry is further configured to determine a measurement of a property of the subject element(s) using the mapping.

The processor circuitry may be further configured to select the subject image(s) and a reference image from a plurality of images of at least part of a component. The reference image may be an image of a further element of the component.

The processor circuitry may be further configured to determine the mapping by determining a 2D to 2D mapping between the subject image(s) and the reference image, determining a 2D to 3D mapping between the reference image and the 3D data and combining the 2D to 2D mapping and the 2D to 3D mapping to determine the mapping between the subject image and the 3D data.

The processor circuitry may be further configured to carry out other steps of the method set out above.

The apparatus may further comprise an interface configured to receive data comprising the subject image and/or the 3D data.

The apparatus may further comprise 2D imaging apparatus to obtain at least one image of the component and/or scanning apparatus to obtain the 3D data, to provide a convenient integrated apparatus for inspecting a component.

The apparatus may further comprise 3D imaging apparatus to obtain the 3D data.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.


BRIEF DESCRIPTION OF DRAWINGS

Embodiments will now be described by way of example only, with reference to the Figures, in which:

   Fig. 1 is a schematic diagram of an apparatus for inspection of a component according to various examples;
   Fig. 2 illustrates a cross sectional side view of a gas turbine engine according to various examples;
   Fig. 3 is a flow diagram of a method of analysing images;
   Fig. 4 is a flow diagram of a method of acquiring and analysing images;
   Fig. 5 is a line diagram comparing different image analysis techniques;
   Fig. 6 is a schematic diagram of an apparatus comprising processor circuitry; and
   Fig. 7 is a schematic diagram of a machine-readable medium in communication with a processor.


DETAILED DESCRIPTION

In the following description, the terms 'connected' and 'coupled' mean operationally connected and coupled. It should be appreciated that there may be any number of intervening components between the mentioned features, including no intervening components.

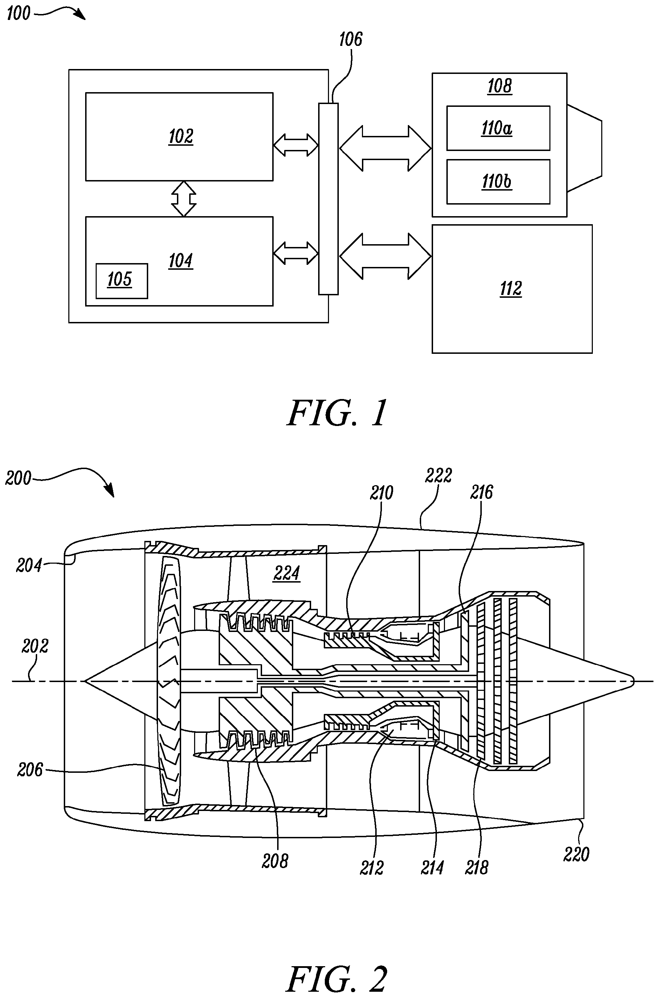

Fig. 1 shows an example of an apparatus 100 which may be used for analysing images, for example in a method of inspecting a component. The apparatus 100 comprises processor circuitry 102, a machine-readable memory 104 and an interface 106. In use of the apparatus 100, the apparatus 100 may receive data (wirelessly or using a wired connection) via the interface 106, in this example from an imaging apparatus 108. Moreover, the apparatus 100 may output data (wirelessly or using a wired connection) via the interface 106 to an output device 112, which may for example comprise any or any combination of a display screen, an audio output, a printer or the like. The interface 106 may for example comprise interface circuitry (such as Universal Serial Bus (USB) plugs and sockets) and/or transceiver circuitry.

In some examples, the apparatus 100 may comprise additional components, such as a user input device enabling a user to at least partially control the apparatus 100 (e.g. any or any combination of a keyboard, a keypad, a touchpad, a touchscreen display, a computer mouse or the like).

The apparatus 100 may comprise a standard computer, configured with software held or accessible to a memory thereof, or a special purpose computer configured with hardware or firmware to carry out the methods described herein. While the apparatus 100 is shown as a single device, components thereof may be distributed between a plurality of devices and locations. Moreover, it will be appreciated that, while the apparatus 100 is illustrated as a physical apparatus in Fig. 1, in examples, at least some functions of the apparatus 100 may be provided 'on the cloud' or the like.

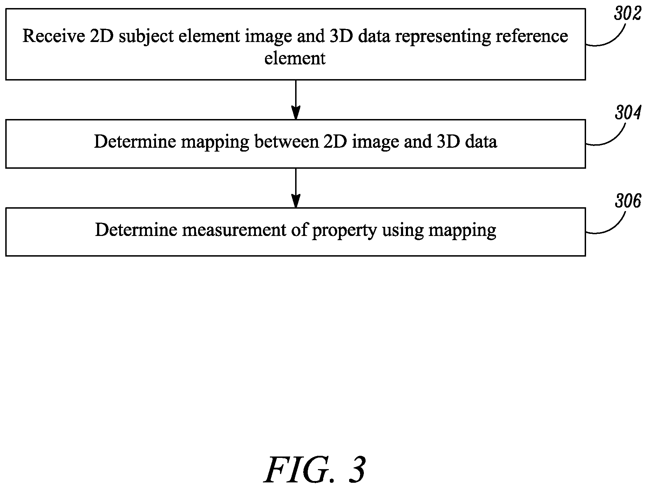

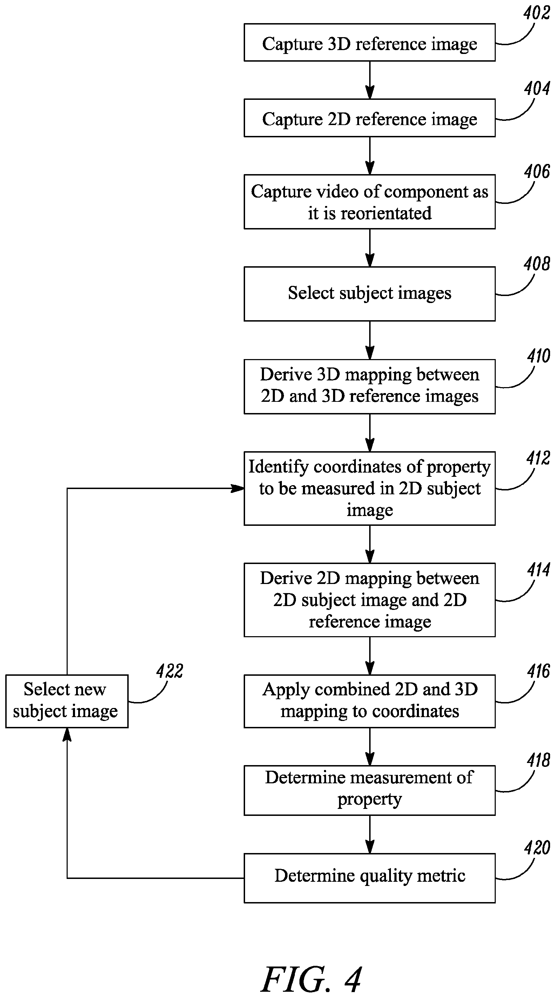

The processor circuitry 102 may comprise any suitable circuitry to carry out, at least in part, the methods described herein and as illustrated in Figs. 3 and 4. For example, the processor circuitry 102 may comprise any or any combination of: at least one application specific integrated circuit (ASIC), at least one field programmable gate array (FPGA), single or multi-processor architectures, sequential/parallel architectures; at least one programmable logic controller (PLC); at least one microprocessor; at least one microcontroller, a central processing unit (CPU), a graphics processing unit (GPU), or the like. The processor circuitry 102 may comprise one or more processors. In some examples, the processing circuitry 102 may be provided by server architecture and/or as a virtual machine.

The memory 104 is a machine-readable medium configured to store computer readable instructions 105 that, when read by the processor circuitry 102 causes the processor circuitry 102 to carry out the methods described herein, and as illustrated in Figs. 3 and 4, at least in part. The computer readable instructions 105 may be software or firmware, or may be a combination of software and firmware. The memory 104 may be any suitable transitory and/or non-transitory computer readable storage medium, data storage device or devices. For example, the memory 104 may comprise a hard disk and/or solid-state memory (such as flash memory). The memory 104 may be permanent non-removable memory or may be removable memory. The memory may include any or any combination of local memory employed during actual execution of the computer readable instructions, bulk storage and cache memories which provide temporary storage of at least some computer readable instructions. The memory 104 may comprise any or any combination of a USB flash drive, an external hard disk drive, an external solid-state drive, a secure digital (SD) card, an optical disc (such as a compact disc (CD), a digital versatile disc (DVD) or a Blu-ray disc), or the like.

The imaging apparatus 108 in this example is provided separately from the apparatus 100 although in other embodiments the imaging apparatus 108 may be part of the apparatus 100. The imaging apparatus 108 may comprise a borescope. Such apparatus may comprise a flexible tube (such as a snake arm), where an imaging sensor is mounted at one end of the flexible tube, and a display 112 is mounted at the opposite end of the flexible tube. In some examples, the imaging apparatus 108 may be embedded within a component which is to be imaged. In some examples, the imaging apparatus 108 may be provided on a moveable platform and the position and/or pose thereof may be controlled. In some examples, the processor circuitry 102 may control the operation of the imaging apparatus 108. In other examples, the imaging apparatus may be controlled by a controller thereof, which may comprise processor circuitry.

In this example, the imaging apparatus 108 comprises a 2D imaging apparatus 110a and a 3D imaging apparatus 110b, although these may not both be provided in all examples, and/or may be provided as part of separate apparatus.

In examples set out herein, the imaging apparatus 108 may be controlled to provide two-dimensional (2D) data of a component under inspection. The 2D imaging apparatus 110a may therefore comprise a camera (for example, a charge-coupled device (CCD) or a complementary metal-oxide-semiconductor (CMOS)) or the like.

Moreover, in some examples set out herein, the imaging apparatus 108 may be controlled to provide three-dimensional (3D) data of a component under inspection. The 3D imaging apparatus 110b may comprise a structured-light three-dimensional scanner, stereo cameras or any other suitable apparatus. Consequently, in some examples, the imaging apparatus 108 may comprise a structured-light three-dimensional scanner for generating three-dimensional data, and a camera for generating 2D data.

The 2D data, and in some examples, the 3D data, may for example be passed to the memory 104 for processing, as further described below. The 2D data may for example comprise an image file (such as a.jpg,.bmp or .raw file for example) The 3D data may specify point locations in the point cloud data (such as a .csv file for example).

Fig. 2 is an example of a component which may be inspected using the apparatus 100, in this example comprising an engine 200. The engine 200 may be associated with an aircraft (e.g. mounted, or configured to be mounted, thereon) and configured to generate propulsive thrust and/or electrical energy for the aircraft. In this example, the engine 200 is a gas turbine engine. However, in other examples, the engine 200 may be a reciprocating engine, an electrical motor; an electrical generator or the like.

In this example, the engine 200 has a principal rotational axis 202. The engine 200 comprises, in axial flow series, an air intake 204, a propulsive fan 206, an intermediate pressure compressor 208, a high-pressure compressor 210, combustion equipment 212, a high-pressure turbine 214, an intermediate pressure turbine 216, a low-pressure turbine 218 and an exhaust nozzle 220. A nacelle 222 generally surrounds the engine 200 and defines both the intake 204 and the exhaust nozzle 220.

Briefly, the engine 200 operates as follows. Air entering the intake 204 is accelerated by the fan 206 to produce two air flows: a first air flow into the intermediate pressure compressor 208 and a second air flow which passes through a bypass duct 224 to provide propulsive thrust. The intermediate pressure compressor 208 compresses the air flow directed into it before delivering that air to the high-pressure compressor 210 where further compression takes place.

The compressed air exhausted from the high-pressure compressor 210 is directed into the combustion equipment 212 where it is mixed with fuel and the mixture combusted. The resultant hot combustion products then expand through, and thereby drive the high, intermediate and low-pressure turbines 214, 216, 218 before being exhausted through the nozzle 220 to provide additional propulsive thrust. The high 214, intermediate 216 and low 218 pressure turbines drive respectively the high pressure compressor 210, intermediate pressure compressor 208 and fan 206, each by a suitable interconnecting shaft.

Some components of the engine 200, for example, each of the fan 206, the compressors 208, 210 and the turbines 214, 216, 218, comprise a plurality of rotating blades, which are nominally the same as the other blades of the component of which they form a part.

Detailed inspections of components of the engine 200 may be carried out periodically. This may comprise inspections of the moving (rotating) components, such as the fan 206, the compressors 208, 210 and the turbines 214, 216, 218. Such components may be rotated to facilitate inspection thereof according to methods set out herein. Moreover, other 'static' components such as any or any combination of fuel nozzles (which may be provided within the combustion chamber 212), nozzle guide vanes, variable stator vanes (which may be provided between stages of compressor blades) may be inspected using methods set out herein by moving an image capture device around the circumference of the engine 200. In principle, such methods may also be used to inspect the rotating components.

It will be appreciated that the engine 200 illustrated in Fig. 2 is by way of example only, and various alternatives are within the scope of the present disclosure. However, in some examples, the component undergoing inspection herein may be a component with a repeating structure, i.e. a plurality of elements (parts or portions) which are similar, or nominally the same, as one another. For example, this may comprise fan, compressor or turbine blades. Turbine blades within a turbine, such as any one of the turbines 214, 216, 218 may be nominally the same as one another, at least in part. In some examples herein, properties of such parts may be measured. The properties may be intended properties, and/or may be defects or the like. The methods set out herein may utilise the fact that the elements are similar to one another, or are similar to a nominal model, to analyse or measure features thereof in an efficient manner.

Fig. 3 is an example of a method for analysing images, for example for inspecting a component (e.g. an engine 200, or a fan 206, or a compressor 208, 210 or a turbine 214, 216, 218 thereof) according to an example. The method may be implemented, at least in part, by processor circuitry such as the processor circuitry 102 described above.

The method comprises, in block 302, receiving data comprising 3D data and 2D data, the 2D data comprising at least one subject image of at least one subject element of a component, and the 3D data comprising data representing a geometry of a reference element of the component.

The subject element(s) may for example comprise a fan, compressor, or turbine blade.

The 2D data may for example be acquired by imaging apparatus, such as the imaging apparatus 108 described above. In some examples, the 2D data comprises image frames taken from a video of the component as it is moved, in which case the imaging apparatus 108 may be a video recording apparatus. For example, a component may be moved (e.g. a turbine 214, 216, 218, or compressor 208, 210, or fan 206 may be rotated about the principal rotational axis 202) such that the elements (e.g. blades) thereof move through a field of view of an imaging apparatus 208 to acquire a sequence of image frames of one or more elements thereof. In some examples, the subject image(s) may be automatically selected from such a sequence, as is described in greater detail below.

A video (or multiple images) may be captured while the component is rotated continuously. Manual and/or automated turning of a rotary component can be inconsistent due to factors such as backlash, gearbox bearings, a clutch mechanism and/or light motion effects due to the inspection environment, in particular if the rotating component is brought to rest in order for imaging of an element to take place before being moved on to image a next element. However, in examples herein, regions of interests for the elements to be assessed can be extracted from the video frames/image set, reducing the impact of such effects.

In some examples, the position of the component may be monitored using position measuring apparatus. For example, the rotation may be monitored using a rotary encoder which records an angle of rotation. In some examples, this information may be used to extract position information of at least one element.

Moreover, while the description above relates to a rotating component, similar principles may be applied to an image capture device which is moved about a component. For example, this may be continuously driven while capturing video and/or multiple images of a component under inspection from different angles or with a relative positional shift.

The 2D data may be provided as an image file, e.g. a .jpeg file, a .bmp file or the like, or as a video file. In some examples, the 2D data may be provided from a memory, or over a network or the like, having been captured separately from performance of the method of Fig. 3.

In some examples, the 3D data comprises data representing another particular element of the component. In other words, a subject element may be a first element of the component and the reference element may be a second, different element of the component. For example, the 3D data may be acquired by scanning or 3D imaging at least part of the component. An inspection device, which may comprise the imaging apparatus 108 described above, may be used to obtain a 3D scan or image of the reference element. For example, imaging apparatus 108 may be inserted into a turbine 214, 216, 218 of an engine 200 and the processor circuitry 102 may receive three-dimensional data of at least one turbine blade of the turbine 214, 216, 218. In some examples, the imaging device 108 comprises a structured-light sensor, which may acquire three-dimensional coordinates of pixels using projected light using triangulation and calibration parameters. In some examples, 3D data may be acquired using stereo cameras and two-dimensional data may be converted into 3D data, for example by processor circuitry of the imaging device 108, by the processor circuitry 102, or by other processor circuitry. In such examples, corresponding pixel points may be identified in the stereo images and used to compute three-dimensional coordinates. In some such examples, an image used in stereo imaging could also be used as a 2D image, for example a 2D image of the reference element.

In other examples, the 3D data may comprise data derived from a model of an element of the component. For example, the 3D data may be derived from a CAD model or the like, and be indicative of the intended, ideal, nominal or archetypal geometry of an element. For example, the 3D data may comprise a model (for example a mesh model, a vector model, a polygon model or a point cloud) of an element such as a turbine blade which may be used in design and/or manufacture of such an element. It will be appreciated that, in practice, a manufactured element may differ from the geometry due to manufacturing tolerances and/or any wear caused to the element.

The processor circuitry 102 and/or the memory 104 may store the 3D data for example as a .csv file or the like.

In block 304, a mapping is determined between the or each subject image and the 3D data, wherein locations in the first image are mapped to locations in 3D space. For example, this may comprise matching features of the subject image and the 3D data. In some examples, this may comprise matching geometrical features, such as a corner, angle, a dimension, or the like. In some examples, the matching may utilize machine learning models. In some examples, as is set out in greater detail below, the mapping may comprise a two stage mapping, wherein a 2D to 2D mapping is determined, mapping between the subject image(s) and a reference image (which may be an image of the reference element, or may be an image of another element of the component), and a 2D to 3D mapping is determined, wherein the 2D to 3D mapping maps between the reference image and the 3D data, wherein locations in the reference image are mapped to locations in 3D space.

In other examples, the mapping may be a single stage mapping between the or each subject image and the 3D data. For example, a registration (e.g. alignment) may be determined between the image of the element in the subject image and the 3D geometry of the reference element.

Block 306 comprises determining a measurement of a property of at least one subject element using the mapping.

In one example, a feature on the subject element to be measured may be indicated, manually or automatically, on the subject image. This may for example comprise an extent of a defect such as a chip or a hole, or a measurement of a spacing such as a spacing between holes, or between elements, or between the element and another part of the component. This may provide coordinates of locations (e.g. pixel locations) indicative of the property to be measured. These locations may then be mapped into 3D coordinates via the mapping determined in block 304. The measurement may be any or any combination of: a measurement of one or more angles, one or more lengths, an area, a volume, the number of identified features, the density of identified features, and the spacing between features. The measurement is determined using the determined coordinates. In order to perform the measurement(s), the processor may perform point cloud processing (such as RANSAC, three-dimensional object matching), CAD alignment with a model of the component, and/or point cloud stitching.

In some examples, the property or feature may be identified automatically, for example using any or any combination of correlation, matching, texture analysis, and artificial intelligence (a deep learning neural network for example). In some examples, block 306 may comprise determining coordinates of the identified property, e.g. the coordinates of each pixel of the feature or property of interest in the image or image file.

This method therefore allows the geometry of the element to be taken into account when assessing the property, despite the property having been identified on a 2D image. Viewed another way, the method described in Fig. 3 may avoid a need to obtain 3D measurements of each of the elements of interest. As obtaining such 3D measurements can be time consuming and also utilize significant energy resources, the method of Fig. 3 can result in faster assessment of properties of elements without unduly sacrificing accuracy, and/or may result in a reduction of the processing resources utilised.

Fig. 4 shows another example of the method of Fig. 3.

In this example, in block 402, a 3D scan of a reference blade of a turbine (for example a blade of the turbine 214, 216, 218) is captured (hereinafter the 3D reference image), although it will be appreciated that the methods described may be applied to elements other than turbine blades. This may for example comprise an RGB-D (Red/Green/Blue-Depth) image. Such an image may provide depth information for each pixel of a captured image. The image may be captured by an imaging device such as a borescope, which may be positioned within the engine 200. Such 3D data may be obtained as 3D structured light measurement (such as 3D Phase Measurement (3DPM)), or by stereographic imaging or using calibrated single camera (which may be a monochromatic, or 'mono' camera), which is to determine 3D information from being repositioned in multiple positions, or in some other manner. The 3D reference image is made available to processor circuitry, for example the processor circuitry 102, for example being passed to and stored in the memory 104.

In some examples, the reference blade is imaged while in an intended position and/or orientation. For example, the reference blade may be imaged in a position such that a good quality image of the blade is obtained. The quality of the image may in some examples be influenced by how much of the blade is visible (with a greater portion of the blade being visible being preferred) and/or how well the blade is lit. In some examples, certain orientations of the blade may be more evenly or more brightly lit than other orientations. Other considerations may apply in other circumstances.

As will be further set out below, the orientation of the reference blade may also be used to select images of subject blade(s).

In this example, in block 404, a 2D image of the reference blade (herein after, the '2D reference image') is captured while the reference blade is in the same orientation. In other words, the orientation of the reference blade is the same when the 2D image and the 3D image is acquired. While this is not necessary in all embodiments, it may simplify the mapping process described below. In some examples, the 2D image of the reference blade may be one image of a stereoscopic image while the 3D image is determined from two images captured from offset positions, wherein one of the two images is the image providing the 2D image. The 2D reference image is made available to processor circuitry, for example the processor circuitry 102, for example being passed to and stored in the memory 104.

In some examples the reference element is selected based on at least one property thereof. For example, the reference blade may be selected to be a blade which appears to be in good physical condition, having little by way of defects such as deformations, holes, nicks, or corrosion. This may be assessed in isolation or in comparison to other blades. As properties such as defects on other elements may be effectively mapped onto this element, providing a blade which provides a relatively complete surface shape assists in providing accurate measurements of properties on other blades. If, for example, a reference element has a significant part thereof missing due to damage, then an undamaged subject element may be mapped incorrectly. Moreover, where part(s) of a reference element is missing, there may be inherently fewer features available to match with another image. As noted above, in some examples, the 3D data may be indicative of a nominal blade to avoid unanticipated nicks, holes or deformations on the reference blade influencing a mapping of a property on a subject blade.

In another example, a reference element may be selected which corresponds to an 'average' or 'representative' element. For example, when an engine is used in a sandy environment, blades may be expected to have a surface texture which does not correspond to a clean or new blade. A blade which is representative of a mid-range level of surface texture may be selected as a reference element in such an example, as images of blades with less damage and those with more damage may map approximately equally well to an image of such a blade. Viewed another way, selecting a 'best' or 'nominally ideal' element as the reference element may bias the registration features which can be used for mapping. In some such cases, a 'representative' reference element may reduce such bias.

In other examples, a plurality of reference elements may be selected to represent a range of element conditions. For example, these could range from a 'good' element, with minimal damage to a 'worst' element, which has acquired significant damage or texture in use. One or more intermediate elements may also be selected. Such reference elements may therefore represent the 'condition distribution' of the elements.

Such elements may be selected by an operator, or programmatically by determining a metric corresponding to one or more features (e.g. surface texture, edge shape, presence of holes, etc) and selecting one or more elements as a reference element based on the metric.

In block 406, a video comprising a plurality of image frames is captured as the component is placed in different orientations, or in this example as the turbine is rotated, and the video is provided to processor circuitry. This rotation causes different blades to pass through the field of view of the imaging device. In some examples, the turbine may be rotated by hand, or driven using a drive tool. In some examples, the rotation is substantially continuous, to reduce effects of backlash and the like. In other examples, a series of images may be taken while the component is moved, capturing a plurality of 2D images, which may comprise images of different elements and/or a plurality of images of at least one element in different orientations. The video is made available to processor circuitry, for example the processor circuitry 102, for example being passed to and stored in the memory 104. In some examples, the 2D reference image comprises a video frame, for example the first video frame. In principle, in other examples, the camera may be moved while the component is stationary, and/or different zooms may be applied to a field of view, or different portions of an image may be selected to obtain a plurality of images of one or more subject elements.

In block 408, at least one subject image is selected from the video by processor circuitry such as the processor circuitry 102. In this example, the image is selected by identifying the image frame in which the orientation of the subject element matches the orientation of the element in the reference image.

In some examples, extracting a subject image comprises comparing each video frame to the reference image to identify image frame(s). For example, this may comprise determining difference values between the reference image and the image frames of the video. In one example, difference data may be determined on a pixelwise basis. It may be appreciated that image frames are likely to be similar to the reference image when the subject element is in a relatively similar position to the position the reference element is in when the reference image is captured. In other words, in such examples, difference values are calculated to estimate alignment.

To discuss this in more detail, considering the video as a whole, there are likely to be peaks and troughs in the difference data of successive frames, the troughs representing a good alignment between the subject element and the reference element as captured in the respective images (low degree of difference between images) and the peaks representing significant misalignment therebetween (high degree of difference between images). If the component is being repositioned at a consistent speed, these may be expected to be regular and smoothly varying. In some examples, image frames which do not conform to smoothly varying peaks and troughs in differences may therefore be removed from the image frames under consideration. These image frames may comprise those in which there was a fluctuation in lighting conditions or an error in data capture, or the like.

For example, images which are associated with a difference value which is above or below the median difference value may be removed from the image frames under consideration. In some examples, a median value of the peaks (i.e. maxima in difference values) and a median value of the troughs (i.e. minima in the difference values) of the video frames when considered as a sequence may be determined. This can be used to set rising and falling thresholds for image frame selection wherein:

$$\text{rising difference threshold} = \text{maxima\_fit} - \varepsilon \times \text{abs}(\text{median} - \text{maxima\_fit}),$$

$$\text{falling difference threshold} = \text{minima\_fit} + \varepsilon \times \text{abs}(\text{median} - \text{minima\_fit})$$

where $\varepsilon$ is a factor which determines how close to the maximum/minimum the rising/falling thresholds are set.

In examples, once such image frames have been removed using a thresholding technique, image frame(s) having a minimum difference value may be selected. In other examples, image frame(s) taken from the identified troughs in the data may be selected.

While in this example, the subject image is selected by comparing the subject image and the reference image as a whole, in other examples, the orientation of the element in the reference image may be determined by identifying matching features in the subject image and the reference image. Examples of feature detection are discussed in greater detail below.

While one technique of determining image frames in which the position of the element matches that of the reference element and the reference image has been described above, it will be appreciated that other techniques could be used in other examples. For example, a positioning apparatus may be used to pause the component when an element is in a specified location (e.g. an accurate turning tool that stops when each component is in the same location) such that an image can be captured. In still further examples, a position measuring apparatus may be provided, for example a position encoder such as a rotary encoder. This may provide position information from which the location of an element and/or imaging apparatus at a particular time may be determined. Still other examples may use a semantic matching algorithm and minimisation of an error to determine when the orientation of the elements match an intended orientation.

Block 410 comprises determining a 3D mapping between the 2D reference image and the 3D reference image. In some examples, this may comprise matching pixels of the 2D reference image with corresponding points in the 3D reference image, which comprises depth information. For example, a registration operation of the 2D and 3D reference images may be carried out such that there is a minimum in the error in their alignment. In other examples, recognisable features between the 2D and 3D reference images may be detected and aligned with one another. It will be appreciated that, in some examples, there may be scale and/or field of view differences between the 2D and 3D reference images. In other examples, there may be some misalignment between the orientations of the reference element in each of the reference images. However, in other examples, the images may be identical in scale and field of view, and in such cases pixel locations may be mapped to points in the 3D image based on their XY position, for example. Where there are differences in scale and/or field of view, registration may be used, with, for example, a minimisation of difference of location of edges or the like.

Each pixel in the 2D reference image may be associated with a corresponding point (e.g. voxel) in the 3D reference image, which in turn is associated with depth information.

Block 412 comprises identifying coordinates of a property to be measured in a subject image. For example, this may comprise a user marked or automatically identified feature such as a hole or nick in an edge, evidence of corrosion, a distance between features such as cooling holes or the like. Pixels indicating the extent of such a property may be automatically or manually identified in the subject image.

Block 414 comprises determining a mapping between the subject image and the 2D reference image. In some examples, in order to determine such a mapping, image registration techniques may be used. For example, this may comprise intensity-based image registration or feature-based image registration.

In intensity-based image registration techniques, a pair of images may be iteratively compared to determine how similar they are while a transformation matrix is applied to one of the images between comparisons. In some examples, interpolation is used to estimate the values of pixels which are present in the transformed image but not in the original image. Each comparison provides a metric and the process may continue until the metric or another parameter, such as the number of iterations, meets a predetermined criterion. The criterion for the metric may for example comprise the convergence to a minimum value or a minimum rate of change. The transformation which resulted in the most similar image may be used as a mapping between the subject image and the 2D reference image.

The initial image transformation for an intensity-based image registration may for example involve the use of landmarks and/or a geometric alignment of features such as image centres, or centre-of-mass (or "moments of inertia"). For landmark initialisation, salient structures (e.g. corners, line intersections, contours, edges or the like), may be identified in both images and an initial transformation is based upon a best-fit. Choice of optimisers include, for example, Gradient Descent (GD); Gradient Descent Line Search (GDLS); Regular Step Gradient Descent (RSGD); Limited Memory Broyden, Fletcher, Goldfarb, Shannon, Bound-constrained (LMBFGSB), or the like. Examples of similarity metrics include Mean-of-Square Differences (MSD), Correlation Coefficient (CC), Joint Histogram (JH), Mutual Information (MI), Mattes Mutual Information (MMI), and the like.

In one particular example, an affine transform and linear interpolation may be the chosen transformation and interpolator. The optimisers used included GD, GDLS, RSGD and LMBFGSB, along with a number of different similarity metrics such as any or any combination of MSD, CC, JH with MI and MMI.

Briefly, feature based image registration techniques map features between images. These techniques may comprise stages of feature mapping, transform model estimation, and image resampling and transformation. Some examples also include feature detection in which salient features are either manually or automatically detected in the image pairs. In feature matching, similarity measures and spatial relationships are used to find corresponding features between images. These features may for example comprise characteristic pixel clusters which are seen in both images. In transform model estimation, a mapping transform or mapping function is estimated from corresponding points. Finally, a subject image may be transformed to more closely match the reference image's coordinate system, yielding a registered image. In other examples, the full image may not be transformed by the mapping and instead only identified points thereof may be transformed.

Examples of feature-based registration techniques include Scale-Invariant Feature Transform (SIFT), which matches features in images. Feature descriptors are vectors that convey location, scale and orientation, and matching candidates are based on the Euclidean distance of the feature vectors. As the name suggests, SIFT is invariant to scale, making it suitable to find features in images within which common or similar objects have a scaling difference.

Some examples of feature-based registration techniques utilise machine learning. For example, KeyNetAff-NetHardNet, which is a combination of KeyNet, AffNet and HardNet architectures may be used. KeyNet is a keypoint feature detector that combines handcrafted and learned Convolutional Neural Network (CNN) filters within a multi-scale architecture. AffNet is a trained hard negative-constant loss function for learning local affine-covariant regions. HardNet is another local feature descriptor learning loss architecture. One or more feature-matching techniques may be used to refine matches. Example choices include Brute-Force and Fast Library for Approximate Nearest Neighbors (FLANN). Brute-Force is a relatively slow and exhaustive approach that iterates through every keypoint in one image, calculates the distance to every keypoint in the other image, and selects the one with the smallest distance. FLANN is a library for performing fast approximate nearest-neighbour searches in high-dimensional spaces. In some examples, FLANN-matched keypoints may be filtered, for example using Lowe's ratio, to remove ambiguous matches.

Adaptive Locally-Affine Matching (AdaLAM) is a fast and accurate outlier filter based on local affine motion verification with sample-adaptive thresholding. LoFTR (Local Feature Mapping with Transformers) is a detector-less feature-based registration approach to local feature matching that uses a four-stage architecture consisting of a CNN for local feature detection, a coarse level local feature transform that makes coarse matches, a differentiable matching layer, and a coarse-to-fine module to refine the matches.

Whilst SIFT is effectively based on corner detection, KeyNetAffNetHardNet and LoFTR are both "geometry-aware" methods.

Whilst some feature detection or matching methods have relatively low processing requirements (e.g. SIFT feature detection, FLANN feature matching, AdaLAM feature matching), others are computationally expensive (e.g. intensity-based registration methods, KeyNetAffNetHardNet feature detection, LoFTR feature matching). In some examples, images may be down sampled in order to reduce the processing resources required.

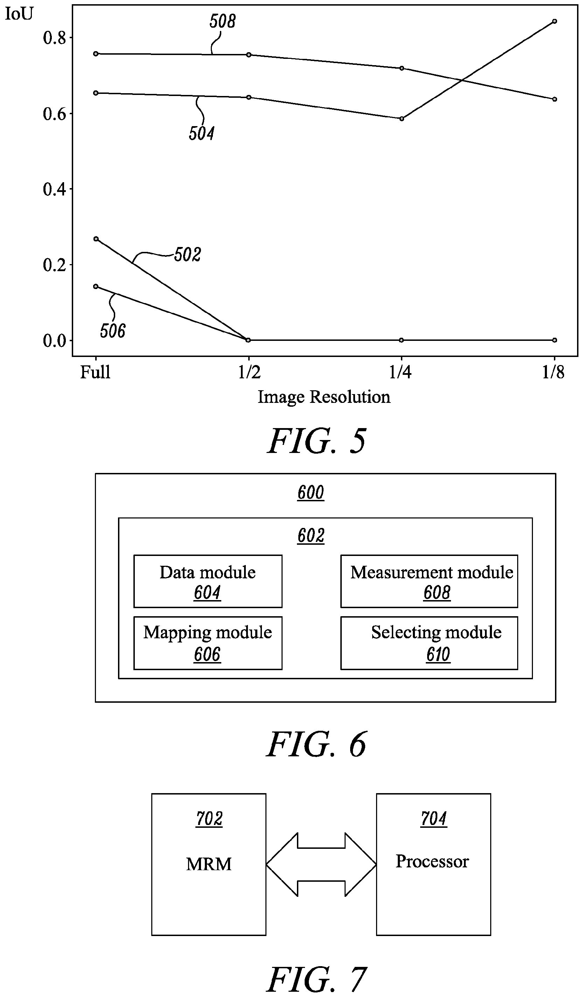

In a particular example of the method described above, the use of LoFTR proved particularly effective at identifying matching features which survived filtering. A comparison between the methods is discussed below in relation to Fig. 5.

The mapping transformations may be parametric, in which the transformation can be expressed as a single matrix that is applied to all pixels, or non-parametric, in which each pixel may be transformed uniquely. In examples herein, parametric transformations were utilised - namely, the affine transform, a non-rigid geometric transformation that preserves lines and parallelism but can describe translations, rotations, scaling and shearing. However in other examples, other mapping transformations may be used.

In some examples, the quality of the mapping in block 410 and/or block 414 may be evaluated. For example, a transformed or warped image may be overlaid on the real image, which allows an operator to visually evaluate how realistic the transformation is. In some examples, the transformation may be scored, for example using image difference metrics such as any or any combination of Mean-Squared Error, Cross Correlation, Mutual Information Score, Mutual Information Joint Histogram, Structural Similarity Index (SSI), Root Sum-of-Square of Pixel Shift or the like. In some examples, if the transformation is determined not to be of sufficient quality, an alert may be generated, and/or an image may be re-processed, for example using a different algorithm until the intended standard is met.

Block 416 comprises using the 2D to 2D mapping determined in block 414 and the 2D to 3D mapping determined in block 410 to map the coordinates of the property identified in block 412 into 3D space. In other words, in block 416, the 2D to 3D point mapping and the 2D to 2D mapping are combined. This may for example comprise applying the transformation determined in block 410 and the transformation determined in block 414 to the regions/coordinates identified in block 412.

Block 418 comprises determining the measurement of the property in three dimensions. For example, if the measurement required is the area of a region, the surface area represented by the 3D points within the identified region may be identified. If the measurement required is a length (i.e. distance between two points) then a Euclidean distance between them may be determined. In other examples, a geodesic distance may be determined by referring to the shape of the surface. Other methods for determining a measurement of the property may be familiar to the skilled person from prior art borescope inspection techniques.

Block 420 comprises using the measurement to determine a quality metric. In some examples, the quality metric may be output to a user. In examples where the quality metric indicates that the element and/or component does not meet predetermined criteria, an alert may be generated. For example, the quality metric may comprise the measurement itself, or a comparison between the measurement and a predetermined value (e.g. an erosion limit, a maximum hole size, a dimension or the like). In other examples, the measurement may be combined with other measurements to provide, for example, a total area of a plurality of holes and/or chips or the like. Again, in some examples, this may be compared to a predetermined value such as a maximum total hole area, a count of a number of holes above a predetermined size, a number of holes/hole area on a given blade, or the like. A user may review the quality metric for example to determine if a further inspection, servicing or the like is advisable.

Block 422 comprises selecting a new subject image, for example an image of a further element such as a different blade of a turbine. This may be selected from the subject images identified in block 408. The method may then loop until all subject images of interest have been inspected.

While a 3D image could be acquired of each element, such images can be relatively time-consuming to acquire when compared to 2D images. For example, in a 3DPM scanning method, a single 3D phase measurement capture generally takes around 10 seconds and repositioning a turbine may take around a further 10 seconds. This may mean that providing a full 3D inspection of a turbine stage may typically take around 30 minutes. In this example, as multiple subject images may be registered to a single 3D image, considerable time may be saved when assessing the component as a whole.

Moreover, it will be appreciated that, while a particular order of execution has been set out above, this may be different in different examples. For example, processing may be carried out in parallel; the 2D images may be captured and processed prior to the 3D image; the subject images may be identified after the 3D mapping has been derived and so on.

Fig. 5 shows an example comparing a plurality of different techniques for determining mappings. In this example, 2D and 3D images of a plurality of elements were obtained. The mapping between a subject 2D image and a reference 3D image via a reference 2D image was obtained and compared to a mapping between a subject 2D image and the 3D image of the same element. In this example data gathered from a single inspection of the HPT blades of a Trent engine was used. The data was gathered using a Waygate Technologies Mentor Visual iQ borescope, using the 3DPM tip. In this example, for the purpose of evaluation, 3D images of each of the subject blades were determined. In this example the property of interest is called a defect, and an assessment was made as to how well the defect as identified in the subject image and mapped to 3D coordinates according to the methods described in Fig. 4 coincided with the same defect as identified in the 3D image. The analysis was carried out using a processing resource running Windows 10 and comprising an Intel® Core™

i3 CPU Type X64 based PC, Intel® HD Graphics card, Resolution 1024 × 768.

Fig. 5 shows an Intersection over Union (IoU) score for each of a number of methods of 2D mappings at different image resolutions. The IOU score is a value between 0 and 1 which rates how similar binary masks are by considering the number of pixels that are and are not common to both. More particularly,

$$\text{IoU} = \frac{\Sigma_{\neq 0} \vee (D_w, D_p)}{\max\left[\Sigma_{\neq 0} \wedge (D_w, D_p), 1\right]}$$

where $D_w$ is the binary defect mask for the subject image warped to the 3D image of the reference image, $D_p$ is the binary defect mask for the 3D image of the subject element, $v$ is the logical OR operator, $\wedge$ is the logical AND operator, and $\Sigma_{\neq 0}$ represents the number of non-zero pixels in a binary mask.

In addition, the quality of the transform was evaluated using an area Error (AE) and Relative Area Error (RAE), calculated as follows:

$$\text{AE} = a_w - a_p$$

$$\text{RAE} = \frac{\text{AE}}{a_p}$$

where $a_w$ is the area measurement of the warped defect, and $a_p$ is the area measurement of the defect for a 3D image that corresponds to the subject image.

Whilst AEs and RAEs are intuitive choices, a limitation of these metrics is that it is possible to have a warped defect that is poorly aligned to the expected defect but which yields a similar area measurement as the expected area measurement. This might occur, for example, if the warped and expected defects occupy a similar number of pixels and the corresponding depths of the pixels are close enough. In an extreme case, one could obtain a very low AE or RAE for two defects that look markedly different in shape and/or location.

For this reason, an IoU score may be preferred, since it accounts for the geometry and location of the defect rather than merely area. The limitation of this metric, however, is that its validity hinges on the assumption that the element position and camera pose are maintained between the 3D subject element image and the 3D reference element image. If this is not the case, a warped defect that perfectly maps to the 3D reference image will not yield an IoU score of one. Moreover, any misalignments in the images with respect to each other will negatively bias the IoU scores.

A first method, indicated by line 502, utilised SIFT +FLANN. At full image resolution, this method identified 423 matching features which were filtered to 3 key features. At half resolution of the subject image, 52 matching features were filtered to provide 4 key features. At quarter resolution of the subject image, 19 matching features were filtered to provide 3 key features. At one eighth resolution of the subject image, no features were found. The IoU metric was 0.267 at full resolution and 0 at all other resolutions. The processing time was 2 seconds at full resolution, 0.7 seconds at half resolution, 0.2 seconds at quarter resolution and 0.02 seconds at one eighth resolution. A value for AE of -7.44 mm and a value for RAE of -14.11 % was determined for the full resolution image. However, no corresponding values can be determined for the other resolutions.

A second method, indicated by line 504, utilised KeyNetAffNetHardNet + AdaLAM. At full image resolution, this method identified 299 matching features which were filtered to 160 key features. At half resolution, 52 matching features were filtered to provide 37 key features. At quarter resolution, 33 matching features were filtered to provide 18 key features. At one eighth resolution, 8 matching features were filtered to provide 6 key features. The IoU metric was 0.654 at full resolution, 0.641 at half resolution, 0.585 at quarter resolution and 0.843 at one eighth resolution. The processing time was 135 seconds at full resolution, 31 seconds at half resolution, 7.3 seconds at quarter resolution and 1.7 seconds at one eighth resolution. A value for AE of - 0.83 mm and a value for RAE of -1.57% was determined for the full resolution image. A value for AE of - 0.4 mm and a value for RAE of -1.76% was determined for the half resolution image. A value for AE of 0.24 mm and a value for RAE of 0.45% was determined for the quarter resolution image. A value for AE of 0.04 mm and a value for RAE of 0.35% was determined for the one eighth resolution image.

A third method, indicated by line 506, utilised SIFT + AdaLAM. At full image resolution, this method identified 19 matching features which were filtered to 8 key features. No features were found at the other resolutions. The IoU metric was 0.142 at full resolution and 0 at all other resolutions. The processing time was 2 seconds at full resolution, 0.7 seconds at half resolution, 0.1 seconds at quarter resolution and 0.01 seconds at one eighth resolution. A value for AE of 27.14 mm and a value for RAE of 45.79% was determined for the full resolution image. However, no corresponding values can be determined for the other resolutions.

A fourth method, indicated by line 508, utilised LoFTR. At full image resolution, this method identified 838 matching features which were filtered to 115 key features. At half resolution, 422 matching features were filtered to provide 51 key features. At quarter resolution, 140 matching features were filtered to provide 10 key features. At one eighth resolution, 29 matching features were filtered to provide 4 key features. The IoU metric was 0.757 at full resolution, 0.754 at half resolution, 0.719 at quarter resolution and 0.637 at one eighth resolution. The processing time was 85 seconds at full resolution, 19 seconds at half resolution, 7.6 seconds at quarter resolution and 1.4 seconds at one eighth resolution. A value for AE of - 1.76 mm and a value for RAE of - 3.33 % was determined for the full resolution image. A value for AE of - 1.85 mm and a value for RAE of - 3.02% was determined for the half resolution image. A value for AE of - 3.55mm and a value for RAE of -6.73 % was determined for the quarter resolution image. A value for AE of 0.04 mm and a value for RAE of 0.35% was determined for the one eighth resolution image.

It may be noted that there is a general trend of diminishing IoU score with increasing down-sampling. However, the IoU for KeyNetAffNetHardNet + AdaLAM for the one eighth resolution image increased to a level surpassing its full-resolution result. The likely cause of this anomaly is due to a fortuitous distribution of matched keypoints in this example and may not be seen in other examples.

In general, in this instance, LoFTR performed significantly better than any other registration method both with and without resolution down sampling, outperforming KeyNetAffNetHardNet + AdaLAM both in accuracy and processing time. However, KeyNetAffNetHardNet + AdaLAM performed significantly better than SIFT plus FLANN. Moreover, although SIFT + AdaLAM performed worse than SIFT + FLANN for the specific pair-wise registration, further investigations revealed this was not the case in general.

It will be appreciated that, in other examples, different mapping techniques may perform better, including examples of the mapping techniques set out above.

Fig. 6 is an example of an apparatus 600 comprising processor circuitry 602. The apparatus 600 may provide an example of the apparatus 100, or of the processor circuitry 102. In this example, the processor circuitry 602 comprises a data module 604, a mapping module 606, a measurement module 608 and a selecting module 610. It will be appreciated that, while various actions are described in the context of each of the modules, they may be implemented on a single processor, or the operations of a single module may be provided on a plurality of processors, or the like. Moreover, the modules may not be distinct from one another in terms of the programming used.

The data module 604 is configured to receive data comprising 3D data and 2D data, the 2D data comprising at least one subject image of at least one subject element of a component, and the 3D data comprising data representing a geometry of a reference element of the component. For example, the data module 604 may be configured to carry out any or any combination of blocks 302, 402, 404 and 406, at least in part.

The mapping module 606 is configured to determine a mapping between the subject image and the 3D data, wherein locations (e.g. pixels) in the subject image are mapped to locations (e.g. voxels) in 3D space. In some examples, the mapping module 606 may be configured to determine the mapping by (i) determining a 2D to 2D mapping between the subject image(s) and a reference image, wherein the reference image is an image of a further element of the component; (ii) determining a 2D to 3D mapping between the reference image and the 3D data and (iii) combining the 2D to 2D mapping and the 2D to 3D mapping to determine the mapping between the subject image(s) and the 3D data. For example, the mapping module 606 may be configured to carry out any or any combination of blocks 304, 410, 414 and 416.

The measurement module 608 is configured to determine a measurement of a property of at least one subject element using the mapping. For example, the measurement module 606 may be configured to carry out any of blocks 306, 412 and 418.

The selecting module 610 (which may not be provided in all embodiments) may be configured to select at least one subject image and the reference image from a plurality of images of at least part of a component. For example, the selecting module 410 may be configured to carry out block 408 described above.

Fig. 7 shows a machine readable medium 702 and a processor 704. The machine readable medium 702 stores instructions which, when executed by a processor cause the processor and/or associated apparatus to carry out any or any combination of the method blocks described herein.

Thus methods set out herein may include inspecting the engine 200 to identify damage. In some examples, a human inspector may be at the same location as the engine 200 and may use a borescope to inspect the components of the engine 200. For example, a human inspector may use a borescope to inspect turbine blades of engine 200 illustrated in Fig. 2 to identify damage.

As used herein, 'damage' includes any change to one or more components of the engine 200 that degrades the one or more components from their initial state, and which may adversely affect the current or future performance of the one or more components. Consequently, 'damage' includes, but is not limited to: loss of material from a component; changes to the shape of a component; and changes to the dimensions of a component.

It will be understood that the invention is not limited to the embodiments above-described and various modifications and improvements can be made without departing from the concepts described herein. For example, the different embodiments may take the form of an entirely hardware embodiment, an entirely software embodiment, or an embodiment containing both hardware and software elements.

Except where mutually exclusive, any of the features may be employed separately or in combination with any other features and the disclosure extends to and includes all combinations and sub-combinations of one or more features described herein.

**Claims**

1.   A method for analysing images, comprising, by processor circuitry:

receiving data comprising three-dimensional, 3D, data and two-dimensional, 2D, data, the 2D data comprising a subject image of a subject element of a component, and the 3D data comprising data representing a geometry of a reference element of the component;
determining a mapping between the subject image and the 3D data, wherein locations in the subject image are mapped to locations in 3D space; and
determining a measurement of a property of the subject element using the mapping.

2.   The method of claim 1 wherein the 2D data comprises a reference image of an element; and wherein determining the mapping comprises:

determining a 2D to 3D mapping between the reference image and the 3D data, wherein locations in the reference image are mapped to locations in 3D space;
determining a 2D to 2D mapping between the subject image and the reference image of the 2D data; and
combining the 2D to 2D mapping and the 2D to 3D mapping to determine the mapping between the subject image and the 3D data.

3.   The method of claim 2 wherein the subject element is a first element of the component, the reference element is a second element of the component and the reference image is an image of the reference element.

4.   The method of claim 2 wherein the subject element is a first element of the component, the reference image is an image of a second element of the component and the 3D data comprises model data representing the geometry of a reference element.

5.   The method of any of claims 2 to 4, wherein the 2D data comprises a plurality of image frames imaging a plurality of elements of the component, the method comprising:
selecting the subject image from the plurality of image frames, wherein selecting the subject image comprises identifying the image frame in which the orientation of the subject element matches the orientation of the element in the reference image.

6.   The method of claim 5 wherein identifying the image frame in which the orientation of the subject element matches the orientation of the element in the reference image comprises identifying matching features in the subject image and the reference image.

7.   The method of any of claims 2 to 6 wherein the 2D to 2D mapping is determined prior to determining the 2D to 3D mapping.

8.   The method of claim 1 wherein:

the subject element is a first element of the component; and
the 3D data comprises 3D data which is:

(i) acquired by measuring a second element of the component; or
(ii) model data representing the geometry of a reference element.

9.   The method of any preceding claim further comprising identifying coordinates in the subject image which are indicative of the property and wherein the mapping is a mapping of the coordinates.

10.   The method of any preceding claim, in which the subject element is an instance of a repeated element of the component.

11. The method of any preceding claim comprising using the measurement of the property of the subject element to determine a quality metric of the component.

12. The method of any preceding claim comprising selecting the subject image from a plurality of images of the subject element based on a conformity between an orientation of the subject element in the images and an intended orientation of the subject element.

13. The method of claim 12 wherein selecting the subject image comprises carrying out image registration using feature mapping.

14. An apparatus comprising processor circuitry, the processor circuitry being configured to:

receive data comprising three-dimensional, 3D, data and two-dimensional, 2D, data, the 2D data comprising a subject image of a subject element of a component, and the 3D data comprising data representing a geometry of a reference element of the component;
determine a mapping between the subject image and the 3D data, wherein locations in the subject image are mapped to locations in 3D space; and
determine a measurement of a property of the subject element using the mapping.

15. Machine readable medium storing instructions which, when executed by a processor cause the processor to carry out the method of any of claims 1 to 13.

*FIG. 1*

*FIG. 2*

Receive 2D subject element image and 3D data representing reference element  *302*

Determine mapping between 2D image and 3D data  *304*

Determine measurement of property using mapping  *306*

*FIG. 3*

*FIG. 4*

IoU

*508*

0.8

*504*

0.6

0.4

*502*

0.2

*506*

0.0

Full          1/2          1/4          1/8

Image Resolution

*FIG. 5*

*600*

*602*

| Data module *604* | Measurement module *608* |
| Mapping module *606* | Selecting module *610* |

*FIG. 6*

*702* MRM ⟺ *704* Processor

*FIG. 7*

**EUROPEAN SEARCH REPORT**

Europäisches Patentamt
European Patent Office
Office européen des brevets

**Application Number**

EP 24 21 2179

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/002039 A1 (FINN ALAN MATTHEW [US] ET AL) 4 January 2018 (2018-01-04) * paragraphs [0021] - [0027;0041] * ----- | 1-15 | INV. G06T7/00 G06V20/64 |
| X | US 2022/044384 A1 (PETERS JAN OKE [DE] ET AL) 10 February 2022 (2022-02-10) * paragraphs [0022;0027;0032;0041;0050] - [0053]; figure 5 * ----- | 1,8-12, 14,15 | |
| X | US 2010/220910 A1 (KAUCIC ROBERT AUGUST [US] ET AL) 2 September 2010 (2010-09-02) * paragraphs [0013;0017] - [0021]; figures 1, 2 * ----- | 1-4,8, 10,11, 14,15 | |

**TECHNICAL FIELDS SEARCHED (IPC)**

G06V
G06T

The present search report has been drawn up for all claims

| Place of search | Date of completion of the search | Examiner |
|---|---|---|
| The Hague | 22 January 2025 | Craciun, Paula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 2179

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2025

| Patent document cited in search report | Publication date | Patent family member(s) | Publication date |
|---|---|---|---|
| US 2018002039 A1 | 04-01-2018 | EP 3264341 A1 | 03-01-2018 |
| | | SG 10201704896P A | 27-02-2018 |
| | | US 2018002039 A1 | 04-01-2018 |
| US 2022044384 A1 | 10-02-2022 | CA 3124782 A1 | 23-07-2020 |
| | | CN 113518911 A | 19-10-2021 |
| | | DE 102019100822 A1 | 16-07-2020 |
| | | EP 3911944 A1 | 24-11-2021 |
| | | ES 2940809 T3 | 11-05-2023 |
| | | JP 7007525 B1 | 24-01-2022 |
| | | JP 2022514107 A | 09-02-2022 |
| | | US 2022044384 A1 | 10-02-2022 |
| | | WO 2020148085 A1 | 23-07-2020 |
| US 2010220910 A1 | 02-09-2010 | NONE | |

EPO FORM P0459

For more details about this annex : see Official Journal of the European Patent Office, No. 12/82